# EUROPÄISCHE PATENTSCHRIFT

(11) **EP 2 489 611 B1**
(45) Veröffentlichungstag und Bekanntmachung des Hinweises auf die Patenterteilung: **02.04.2014**
(21) Anmeldenummer: 12154816.8
(22) Anmeldetag: 10.02.2012
(51) Int. Cl.: B65G 15/60, B65G 23/06

(54) **Fördereinrichtung mit einem angetriebenen Endloszugmittel für Produkte der Tabak verarbeitenden Industrie**
Conveyor device with a powered endless pulling instrument for articles from the tobacco processing industry
Dispositif de transport doté d'un moyen de traction sans fin entraîné pour produits de l'industrie de traitement du tabac

(30) Priorität: 16.02.2011 DE 102011011403
(43) Veröffentlichungstag der Anmeldung: 22.08.2012
(73) Patentinhaber: HAUNI Maschinenbau AG, 21033 Hamburg (DE)
(72) Erfinder: Dierken, Hans, 21385 Amelinghausen (DE); Kleinfeld, Markus, 22179 Hamburg (DE); Burfeind, Kai, 21684 Agathenburg (DE); Schuster, Frank, 21035 Hamburg (DE)
(74) Vertreter: Müller Verweyen

(56) Entgegenhaltungen:
- EP-A1- 0 726 215
- AT-B- 339 813
- DE-A1- 2 719 332
- DE-A1- 2 839 262
- DE-A1-102007 016 287
- FR-A- 1 178 382
- US-A- 3 521 740
- US-A1- 2006 084 542

## Beschreibung

Die Erfindung betrifft eine Fördereinrichtung mit einem angetriebenen Endloszugmittel für Produkte der Tabak verarbeitenden Industrie mit wenigstens einer Umlenkeinrichtung, an der das Endloszugmittel außenseitig umgelenkt ist, wobei das Endloszugmittel nach außen vorstehende Mitnehmer zur Mitnahme der Produkte aufweist.

Fördereinrichtungen mit angetriebenen Endloszugmitteln werden z.B. dazu verwendet, Rohprodukte, wie z.B. geschnittene Tabakfasern, einer weiteren Verarbeitungsstation zuzuführen, wobei das Rohprodukt dabei als Massengut über eine horizontale Strecke oder über einen Schrägabschnitt zu einem Abgabeort transportiert wird. Das Rohprodukt wird dabei auf das Endloszugmittel aufgegeben und mittels einer Vielzahl von auf dem Endloszugmittel angeordneten Mitnehmern mitgenommen. Die Mitnehmer können je nach der Beschaffenheit des Rohproduktes entweder als durchgehende von dem Endloszugmittel abragende Schienen oder auch als vorstehende Zinken ausgebildet sein. Alternativ können die Mitnehmer auch aus einer Kombination einer durchgehenden Schiene mit davon abragenden Zinken ausgebildet sein. Zur Erzielung einer möglichst hohen Förderkapazität ist es sinnvoll, ein möglichst breites Endloszugmittel zu verwenden, wobei sich eine Breite von 1600 - 2200 mm bei einer Förderkapazität von 16 t/h für den Verarbeitungsprozess der Produkte in der Gesamtvorrichtung als erstrebenswert herausgestellt hat. Das Endloszugmittel selbst kann aus einem Gewebeband oder aus einem gewebeverstärkten Elastomergurt hergestellt sein.

Das Endloszugmittel muss während der Förderbewegung an verschiedenen Umlenkstellen mehrfach umgelenkt werden, und kann in einen Obertrum und einen Untertrum unterteilt werden. Der Obertrum ist der Abschnitt des Endloszugmittels, in dem das Produkt von dem Aufgabe- zu dem Abgabeabschnitt des Endloszugmittels transportiert wird, während der Untertrum der Abschnitt des Endloszugmittels ist, in dem das Endloszugmittel von dem Abgabeabschnitt des Endloszugmittels an der Unterseite der Fördereinrichtung zu dem Aufgabeabschnitt zurückgeführt wird. Damit läuft der Obertrum, gemäß seines Namens, an der Oberseite der Fördereinrichtung, während der Untertrumm an der Unterseite verläuft. Zur Förderung des Produktes an einen höheren Abgabeabschnitt verläuft das Endloszugmittel dabei im Obertrum von dem horizontalen Aufgabeabschnitt in einem Schrägabschnitt nach oben zu einem wiederum horizontalen Abgabeabschnitt. Der Aufgabe- und/oder Abgabeabschnitt können selbstverständlich auch in einem Winkel verlaufen, oder je nach der Geometrie der Fördereinrichtung nur sehr kurz ausgebildet oder sogar gar nicht vorhanden sein. Im Rücklauf des Endloszugmittels in dem Untertrum ist die Reihenfolge dann entsprechend umgekehrt, wobei auf dem Untertrum des Endloszugmittels dann kein Produkt mehr aufliegt.

Im Übergang von dem horizontalen Aufgabeabschnitt zu dem Schrägabschnitt und von dem Schrägabschnitt zu dem horizontalen Abgabeabschnitt muss das Endloszugmittel jeweils durch Anlage an einer innen- oder außenseitig angeordneten Umlenkeinrichtung umgelenkt werden. Bei der Umlenkung des Endloszugmittels an der außenseitig angeordneten Umlenkeinrichtung ist dabei zu berücksichtigen, dass auf dem Endloszugmittel die abragenden Mitnehmer vorgesehen sind. Aus diesem Grund wurde die außenseitige Umlenkeinrichtung bisher dadurch verwirklicht, indem das Endloszugmittel an mehreren an dem Rand des Endloszugmittels angeordneten Umlenkrollen umgelenkt und geführt ist, so dass der Mittenabschnitt des Endloszugmittels mit den Mitnehmern frei zwischen den Umlenkrollen hindurch laufen kann, und dadurch zwangsläufig nicht unterstützt wird.

Für den Fall, dass mit der Fördereinrichtung eine große Förderhöhe erzielt werden soll, muss der Schrägabschnitt verhältnismäßig lang und/oder steil ausgeführt werden, wobei die Abstände zwischen den Umlenkeinrichtungen des Endloszugmittels dann entsprechend groß gewählt werden müssen. Dieser große Abstand in Verbindung mit der großen Breite des Endloszugmittels hat nachteilig zur Folge, dass das Endloszugmittel unter dem Eigengewicht und/oder unter den hohen in dem Endloszugmittel wirkenden Zugkräften im Bereich der Umlenkeinrichtung zwangsläufig ausbeult. Aufgrund dieser sich ergebenden Ausbeulung werden die Führung des Endloszugmittels und die Spannungsverteilung in dem Endloszugmittel nachteilig beeinflusst, wodurch wiederum die maximal zu verwirklichende Zugkraft und die Breite des Endloszugmittels begrenzt werden. Da die Breite des Endloszugmittels und die Zugkraft in dem Endloszugmittel unmittelbar mit der Förderkapazität der Fördereinrichtung zusammenhängen, wird dadurch auch indirekt die maximale Förderkapazität begrenzt.

Aus der US 3,521,740 ist eine Fördereinrichtung gemäß dem Oberbegriff des Anspruchs 1 bekannt, wobei ein Endlosförderband durch Führungsteile unterstützt ist. Die Führungsteile sind drehbar gelagert und weisen eine Führungsfläche auf, die durch regelmäßig angeordnete Ausnehmungen unterbrochen ist. Das Förderband greift mit entsprechenden Mitnehmern in die Ausnehmungen ein und liegt außenseitig an der Führungsfläche an.

Aufgabe der Erfindung ist es, eine Fördereinrichtung der gattungsgemäßen Art mit einer verbesserten Führung des Endloszugmittels zu schaffen.

Zur Lösung der Aufgabe wird eine Fördereinrichtung mit den Merkmalen von Anspruch 1 vorgeschlagen. Weitere bevorzugte Weiterbildungen der Erfindung sind den Unteransprüchen, den Figuren und der zugehörigen Beschreibung zu entnehmen.

Die Ausnehmungen sind durch sich nach außen verengende Taschen gebildet, wodurch dem Umstand Rechnung getragen werden kann, dass die Mitnehmer zwischen dem Beginn der Eintauchbewegung und dem Ende der Austrittsbewegung eine Schwenkbewegung in Bezug zu dem Führungsteil ausführen, während der die in die Ausnehmungen eintauchenden Enden der Mitnehmer einen größeren Weg relativ zu dem Führungsteil zurücklegen als die in den Öffnungen der Ausnehmungen bewegten Anfangsabschnitte der Mitnehmer.

Erfindungsgemäß sind die Ausnehmungen derart geformt, dass die Mitnehmer während der Austrittsbewegung zur Anlage an dem die Ausnehmung begrenzenden Rand des Führungsteils gelangen, und dass das Führungsteil dadurch zu einer Drehbewegung angetrieben wird. Das Führungsteil wird dadurch zu einer zu der Bewegung des Endloszugmittels synchronisierten Drehbewegung angetrieben, so dass die Mitnehmer und die Ausnehmungen während der Eintauchbewegung der Mitnehmer automatisch synchronisiert paarweise aufeinander zu bewegt werden. Aufgrund des einfachen synchronisierten Antriebes der Führungsteile kann auf einen eigenen Antrieb des Führungsteils verzichtet werden, wodurch wiederum die Kosten gesenkt und der konstruktive Aufwand verringert werden können.

Weiter wird vorgeschlagen, dass das Führungsteil als Scheibe ausgebildet ist. Die Ausbildung des Führungsteils als Scheibe bietet den Vorteil, dass das Endloszugmittel auch bei einem geringen für das Führungsteil zur Verfügung stehenden Bauraum auf einem großen Durchmesser unterstützt werden kann. Ferner kann das Führungsteil bei einem geringen Eigengewicht formstabil ausgeführt werden, wobei die geringe Querstabilität der Scheibe hier nicht von Nachteil ist, da die Scheibe bei einer Unterstützung des Endloszugmittels im Wesentlichen radial belastet wird.

In diesem Fall wird weiter vorgeschlagen, dass wenigstens zwei beabstandet und koaxial angeordnete, an dem Endloszugmittel anliegende Scheiben zur Führung des Endloszugmittels vorgesehen sind. Durch die Verwendung von zwei oder mehr Scheiben kann die Unterstützung des Endloszugmittels weiter verbessert werden, indem die Auflagekraft auf mehrere Scheiben verteilt wird bzw. das Endloszugmittel an mehreren Stellen unterstützt wird.

Weiter wird vorgeschlagen, dass die Scheiben drehfest miteinander verbunden sind. Aufgrund der drehfesten Verbindung der Scheiben ist die relative Ausrichtung der Scheiben zueinander nach der Montage festgelegt, so dass die Scheiben als Paket konstruktiv einfach in eine räumliche Zuordnung zu dem auflaufenden Endloszugmittel mit den davon abragenden regelmäßig angeordneten Mitnehmern gebracht werden können. Die Scheiben können dabei sowohl direkt miteinander verbunden sein als auch drehfest auf einer gemeinsamen Welle befestigt sein, wichtig ist nur, dass sich die Ausrichtung der Scheiben während des Betriebes der Fördereinrichtung nicht verändert.

Weiter wird vorgeschlagen, dass die Scheiben derart angeordnet sind, dass die Ausnehmungen quer zu der Bewegung des Endloszugmittels fluchten. Die Ausnehmungen bilden damit in der fluchtenden Richtung einen durchgehenden Kanal, wodurch z.B. Mitnehmer in Form von durchgehenden geraden Schienen besonders gut in die Ausnehmungen der parallel angeordneten Führungsteile eintauchen können.

Ferner wird vorgeschlagen, dass die Mitnehmer selbst oder in ihrer Gesamtheit eine Kammstruktur mit einzeln vorstehenden Zinken aufweisen oder bilden, und dass die Scheiben eine Dicke aufweisen, welche kleiner als der Abstand der Zinken ist. Die Scheiben können dadurch zwischen den Zinken durchtauchen, so dass die Mitnehmer selber in der Höhe der Zinken größer bemessen werden können als die Tiefe der Ausnehmungen.

In diesem Fall sollten immer wenigstens zwei Mitnehmer gleichzeitig in unterschiedliche Ausnehmungen des Führungsteils eingreifen, so dass während des Antriebes des Führungsteils über einen Mitnehmer durch die Anlage an dem Rand der Ausnehmung bereits wenigstens ein Mitnehmer in eine andere Ausnehmung eingetaucht ist, der während des nachfolgenden Bewegungsablaufes den Antrieb des Führungsteiles fortsetzt. Dadurch ist ein kontinuierlicher Antrieb des Führungsteils sichergestellt. Außerdem kann durch den gleichzeitigen Eingriff zweier Mitnehmer die Synchronisation verbessert werden, da sich die Austrittsbewegung eines Mitnehmers und die Eintauchbewegung eines weiteren Mitnehmers immer zeitlich überlappen, so dass die Eintauchbewegung der Mitnehmer in die Ausnehmungen direkt von der Austrittsbewegung der aus den Ausnehmungen austretenden Mitnehmer gesteuert wird.

Die Erfindung wird im Folgenden anhand bevorzugter Ausführungsformen unter Bezugnahme auf die beigefügten Figuren 1-4 erläutert. Die Ausführungsformen der Figuren 5-8 sind kein Teil der vorliegenden Erfindung. Dabei zeigen:
- Fig.1:: Fördereinrichtung mit einem Endloszugmittel;
- Fig.2:: Führungsteil mit einem anliegenden Endloszugmittel mit schienförmigen Mitnehmern;
- Fig.3:: Führungsteil mit einem anliegenden Endloszugmittel mit Mitnehmern mit einer Kammstruktur in Schrägansicht;
- Fig.4:: Führungsteil mit einem anliegenden Endloszugmittel mit Mitnehmern mit einer Kammstruktur in Seitenansicht;
- Fig.5:: Synchronscheibe mit in eine Lochreihe eingreifenden Mitnahmestiften in Schrägansicht;
- Fig.6:: Synchronscheibe mit in eine Lochreihe eingreifenden Mitnahmestiften in Seitenansicht;
- Fig.7:: Synchronscheibe mit seitlich abragenden Mitnahmestiften in Seitenansicht;
- Fig.8:: Synchronscheibe mit seitlich abragenden Mitnahmestiften in Sicht von oben.

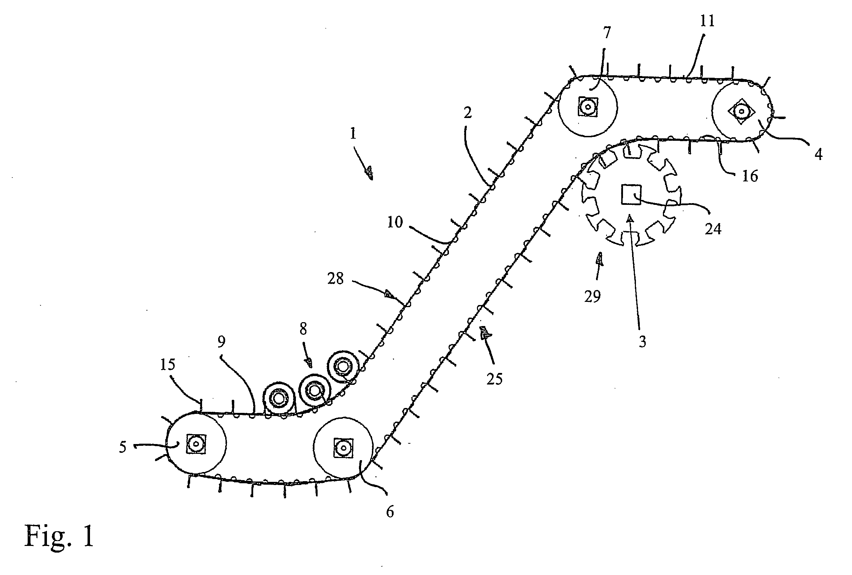

In der Figur 1 ist eine erfindungsgemäß ausgebildete Fördereinrichtung 1 mit einem Endloszugmittel 2 zu erkennen. Das Endloszugmittel 2 kann durch einen Gewebegurt, einen gewebeverstärkten Elastomergurt oder auch aus einem anderen Material gebildet sein, welches ausreichend flexibel ist und gleichzeitig die nötige Zugfestigkeit zur Übertragung der Zugkraft aufweist. Die Fördereinrichtung 1 weist einen horizontalen Aufgabeabschnitt 9, einen höher gelegenen horizontalen Abgabeabschnitt 11 und einen den Aufgabe- und Abgabeabschnitt 9 und 11 miteinander verbindenden Schrägabschnitt 10 auf. Zum Antrieb des Endloszugmittels 2 ist dieses an seiner Innenseite mit vorstehenden Nocken 16 versehen, mit denen das Endloszugmittel 2 formschlüssig in Eingriff in entsprechend geformte Ausnehmungen einer Antriebstrommel 4 gelangt, die wiederum von einer Antriebseinrichtung, wie z.B. einem Elektromotor antreibbar ist. An dem horizontalen Aufgabeabschnitt 9 wird das Endloszugmittel 2 mittels einer Spanntrommel 5 gespannt. Zwischen der Antriebstrommel 4 und der Spanntrommel 5 sind verschiedene Umlenkeinrichtungen 6,7,8 und 29 vorgesehen, um das Endloszugmittel 2 dem oben beschriebenen Verlauf entsprechend zu führen. An der Außenseite des Endloszugmittels 2 sind nach außen abragende Mitnehmer 15 vorgesehen, welche das Produkt von dem Aufgabeabschnitt 9, den Schrägabschnitt 10 hinauf zu dem Abgabeabschnitt 11 transportieren. Produkte, welche mittels der beschriebenen Fördereinrichtung 1 förderbar sind, sind z.B. Tabakfasern in verschiedenen Verbundformen, lose Tabakfasern, Rohtabak, Tabakfolie oder expandierter Tabak, welche zur weiteren Verarbeitung kontinuierlich gefördert werden müssen.

Aufgrund der mit modernen Fördereinrichtungen 1 zu erzielenden Förderhöhe von mehreren Metern ist es nicht zu vermeiden, dass der Abstand zwischen den den Schrägabschnitt 10 in Längsrichtung begrenzenden Umlenkeinrichtungen 6,8 und 7,29 bis zu 8,00 m beträgt. Damit das Produkt über diesen verhältnismäßig langen Schrägabschnitt gefördert wird, muss das Endloszugmittel 2 mit einer entsprechend großen Zugkraft angetrieben werden, wodurch die eingangs beschriebene Problematik mit begründet ist.

Das Endloszugmittel 2 kann in seinem Verlauf in einen Obertrum 28 und einen Untertrum 25 unterteilt werden, wobei das Produkt auf den Obertrum 28 aufgegeben und gefördert wird, während das Endloszugmittel 2 in dem Untertrum 25 von dem Abgabeabschnitt 11 zu dem Aufgabeabschnitt 9 zurückgeführt wird.

Sofern der Antrieb des Endloszugmittels 2 über die Antriebstrommel 4 erfolgt, ist die Gefahr des Ausbeulens des Endloszugmittels 2 an der außenseitig an dem Untertrum 25 anliegenden Umlenkeinrichtung 29 am größten. Sofern der Antrieb des Endloszugmittels 2 von der Seite des Aufgabeabschnitts 9 erfolgt ergibt sich zwar eine etwas andere Kräfteverteilung, die kritische Stelle des Ausbeulens des Endloszugmittels 2 bleibt aber die Umlenkeinrichtung 29.

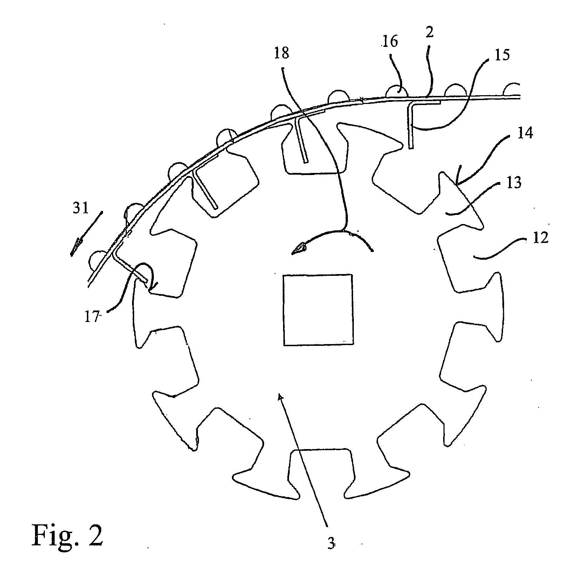

Damit das Endloszugmittel 2 an der Umlenkeinrichtung 29 aufgrund der hohen Zugkräfte und der großen Breite nicht ausbeult, ist die Umlenkeinrichtung 29 erfindungsgemäß durch das Führungsteil 3 gebildet, welches nachfolgend in den Figuren 2 bis 4 näher beschrieben wird.

In der Figur 2 ist das Führungsteil 3 in Seitenansicht auf das Endloszugmittel 2 zu erkennen. Das Führungsteil 3 weist eine Mehrzahl von durch Ausnehmungen 12 voneinander getrennte, nach außen abragende Finger 13 auf, deren Stirnseiten in der Gesamtheit eine Führungsfläche 14 bilden, die durch die Ausnehmungen 12 unterbrochen wird. Dabei ist es für die Funktionsfähigkeit der Erfindung unerheblich, ob der Flächenanteil der Ausnehmungen 12 oder der Flächenanteil der Stirnseiten der Finger 13 den größeren Anteil des Umfanges ausmachen, wichtig ist nur, dass die Stirnseiten der Finger 13 so ausgebildet sind, dass sie durch die Anlage an dem Endloszugmittel 2 die Ausbeulung des Endloszugmittels 2 im Bereich der Umlenkeinrichtung 29 zumindest verringern und dadurch zusammen während des Bewegungsablaufs eine Führungsfläche 14 bilden. Aufgrund der vorgesehenen Ausnehmungen 12 wird es ermöglicht, dass die Mitnehmer 15 in das Führungsteil 3 eintauchen, und die Finger 13 dadurch mit den Stirnseiten zur Anlage an der Außenseite des Endloszugmittels 2 gelangen, ohne dass die Mitnehmer 15 den Bewegungsablauf stören. Das Endloszugmittel 2 wird damit an der Führungsfläche 14 gebildet und durch die Stirnseiten der Finger 13 umgelenkt.

Die Abstände der Ausnehmungen 12 sind dabei so gewählt, dass wenigstens zwei der Mitnehmer 15 gleichzeitig in unterschiedliche Ausnehmungen 12 eintauchen. Ferner verengen sich die Ausnehmungen 12 nach außen hin, so dass sich insgesamt eine größere Führungsfläche 14 ergibt, und die Mitnehmer 15 während der Bewegung des Endloszugmittels 2 in Pfeilrichtung 31 eine Schwenkbewegung in den Ausnehmungen 12 ausführen können.

Während der Bewegung des Endloszugmittels 2 in Pfeilrichtung 31 gelangen die Mitnehmer 15 beim Ausfahren aus den Ausnehmungen 12 an dem Rand 17 der Ausnehmungen 12 zur Anlage und treiben dadurch das Führungsteil 3 in Pfeilrichtung 18 zu einer synchronen Drehbewegung an. Durch die synchrone Drehbewegung werden jeweils eine Ausnehmung 12 und ein Mitnehmer 15 in dem Anlaufbereich des Endloszugmittels 2 auf das Führungsteil 3 synchron paarweise aufeinander zu bewegt, so dass sich insgesamt ein harmonischer klemmfreier Bewegungsablauf des Führungsteils 3 zu dem Endloszugmittel 2 ergibt. Außerdem können die Reibung und der Verschleiß des Endloszugmittels 2 und des Führungsteils 3 durch die synchrone Drehbewegung des Führungsteils erheblich reduziert werden.

In den Darstellungen ist stellvertretend immer nur ein Führungsteil 3 zu erkennen. Sinnvollerweise sind zur Unterstützung des relativ breiten Endloszugmittels 2 eine Mehrzahl von identischen Führungsteilen 3 vorgesehen, welche mittels einer in entsprechende Ausnehmungen 24 der Führungsteile 3 eingreifenden Welle 23 drehfest und in identischer Ausrichtung miteinander verbunden sind. Die Anzahl und die Abstände der Führungsteile 3 können dabei in Abhängigkeit der individuellen Zugkraft und Flächenlast des Endloszugmittels 2 gewählt werden. Aufgrund der identischen Ausrichtung der Führungsteile 3 und der synchronisierten Antriebsbewegung befinden sich die Ausnehmungen 12 der verschiedenen Führungsteile 3 in einer festen räumlichen Zuordnung zueinander und zu den auflaufenden Mitnehmern 15, so dass sich bei einer entsprechend regelmäßigen Anordnung der Mitnehmer 15 ein harmonischer klemmfreier Bewegungsablauf erzielen lässt. Im Idealfall sind die Ausnehmungen 12 dabei quer zu der Bewegungsrichtung des Endloszugmittels 2 fluchtend ausgerichtet, so dass die Mitnehmer 15 als quer zu der Bewegungsrichtung des Endloszugmittels 2 ausgerichtete Schienen ausgebildet sein können, was wiederum Vorteile für den Transport des Produktes bietet. Die Führungsteile 3 können als Scheiben auf der Welle 23 befestigt werden, und verursachen dadurch bei einer ausreichenden mechanischen Unterstützung aufgrund der geringen Breite nur geringe Reibungskräfte, welche zudem dadurch auf ein Minimum reduziert werden, da die Führungsteile 3 von dem Endloszugmittel 2 synchronisiert angetrieben werden und dadurch in der Anlagefläche mit derselben Geschwindigkeit bewegt wird. Ferner ist die Verwendung von Scheiben als Führungsteile 3 insofern vorteilhaft, da diese wenig Bauraum benötigen und kostengünstig gefertigt werden können.

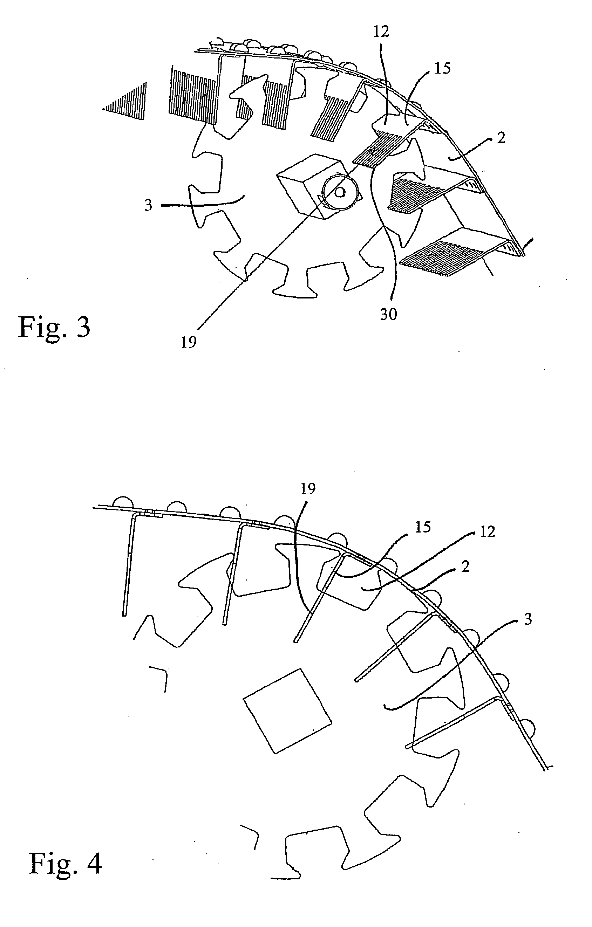

In den Figuren 3 und 4 ist eine Weiterentwicklung der Erfindung zu erkennen, bei der die Mitnehmer 15 an ihren Enden mit einer Kammstruktur 19 mit einer Mehrzahl von beabstandeten Zinken 30 versehen sind. Der Abstand der Zinken 30 ist dabei größer als die Dicke des scheibenförmigen Führungsteils 3 gewählt, so dass das Führungsteil 3 zwischen die Zinken 30 eintauchen kann.

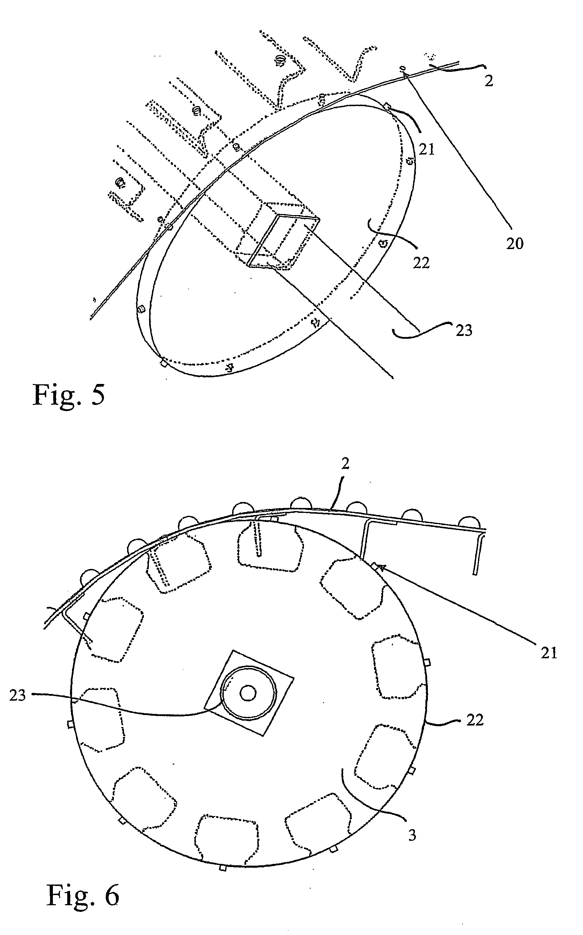

In den Figuren 5 und 6 ist ein Ausführungsbeispiel, das kein Teil der Erfindung ist, zu erkennen, bei dem die Führungsteile 3 drehfest mit einer seitlich angeordneten Synchronscheibe 22 verbunden sind. Die Synchronscheibe 22 weist mehrere in Umfangsrichtung, regelmäßig angeordnete, vorstehende, radiale Mitnahmestifte 21 auf, welche während der Zugbewegung des Endloszugmittels 2 in entsprechende, eine Lochreihe bildende Ausnehmungen 20 in dem Rand des Endloszugmittels 2 eingreifen, wodurch die Synchronscheibe 22 selbst und die drehfest mit der Synchronscheibe 22 verbundenen Führungsteile 3 synchron angetrieben werden.

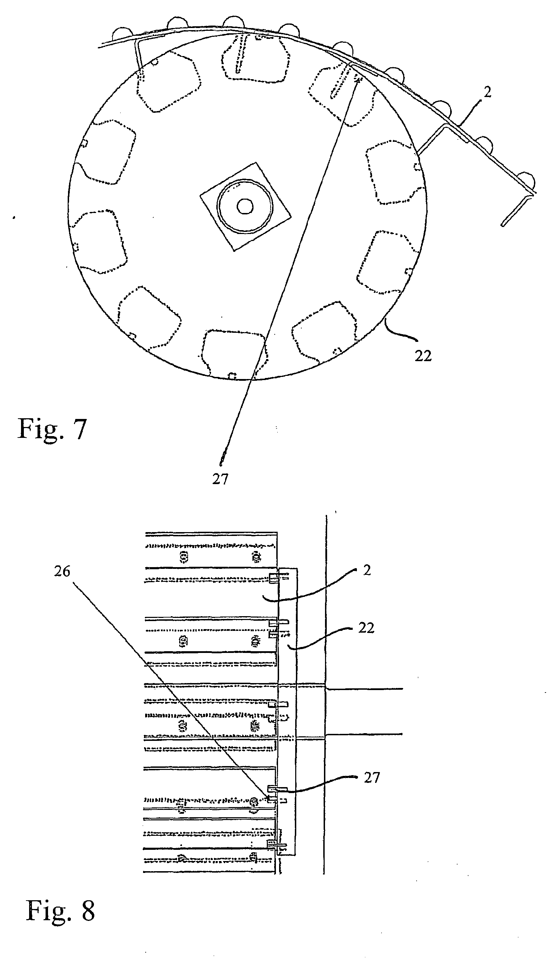

In den Figuren 7 und 8 ist ein weiteres Ausführungsbeispiel, das kein Teil der Erfindung ist, zu erkennen, bei dem die Synchronscheibe 22 mit seitlich abragenden Mitnahmestiften 27 versehen ist, die während der Zugbewegung des Endloszugmittels 2 zum Eingriff in taschenförmige, seitliche Ausnehmungen 26 des Endloszugmittels 2 gelangen, wodurch die Synchronscheibe 22 und die Führungsteile 3 wiederum in gleicher Weise wie in den Figuren 5 und 6 synchronisiert angetrieben werden.

In einem weiteren Ausführungsbeispiel, das kein Teil der Erfindung ist, erfolgt die synchronisierte Bewegung der Führungsteile 3 durch eine gesonderte Antriebseinrichtung, welche selbst zu der Antriebseinrichtung des Endloszugmittels 2 synchronisiert ist.

Als besonders leichter und kostengünstiger Werkstoff bei einer ausreichenden Festigkeit für die Führungsteile 3 werden pyrolysekonforme Kunststoffe, wie z.B. Polyester vorgeschlagen.

## Patentansprüche

1. Fördereinrichtung (1) mit einem angetriebenen Endloszugmittel (2) für Produkte der Tabak verarbeitenden Industrie, mit
- wenigstens einer Umlenkeinrichtung (29), an der das Endloszugmittel (2) außenseitig umgelenkt ist, wobei
- das Endloszugmittel (2) nach außen vorstehende Mitnehmer (15) zur Mitnahme der Produkte aufweist, wobei
- die Umlenkeinrichtung (29) durch ein drehbar gelagertes Führungsteil (3) gebildet ist, welches eine Führungsfläche (14) aufweist, die durch regelmäßig angeordnete Ausnehmungen (12) unterbrochen ist, in die die Mitnehmer (15) aufnehmbar sind, wobei die Ausnehmungen (12) derart geformt sind, dass die Mitnehmer (15) während der Austrittsbewegung zur Anlage an dem die Ausnehmung (12) begrenzenden Rand (17) des Führungsteils (3) gelangen, und dass das Führungsteil (3) dadurch zu einer Drehbewegung angetrieben wird,
**dadurch gekennzeichnet, dass**
- die Ausnehmungen (12) durch sich nach außen verengende Taschen gebildet sind.

2. Fördereinrichtung (1) nach Anspruch 1, **dadurch gekennzeichnet, dass**
- das Führungsteil (3) als Scheibe ausgebildet ist.

3. Fördereinrichtung (1) nach Anspruch 2, **dadurch gekennzeichnet, dass**
- wenigstens zwei beabstandet und koaxial angeordnete, an dem Endloszugmittel (2) anliegende als Scheibe ausgebildete Führungsteile (3) zur Führung des Endloszugmittels (2) vorgesehen sind.

4. Fördereinrichtung (1) nach Anspruch 3, **dadurch gekennzeichnet, dass**
- die Scheiben drehfest miteinander verbunden sind.

5. Fördereinrichtung (1) nach Anspruch 3 oder 4, **dadurch gekennzeichnet, dass**
- die Scheiben derart angeordnet sind, dass die Ausnehmungen (12) quer zu der Bewegung des Endloszugmittels (2) fluchten.

6. Fördereinrichtung (1) nach einem der Ansprüche 3 bis 5, **dadurch gekennzeichnet, dass**
- die Mitnehmer (15) selbst oder in ihrer Gesamtheit eine Kammstruktur (19) mit einzeln vorstehenden Zinken (30) aufweisen oder bilden, und
- dass die Scheiben eine Dicke aufweisen, welche kleiner als der Abstand der Zinken (30) ist.

7. Fördereinrichtung (1) nach einem der vorangegangenen Ansprüche, **dadurch gekennzeichnet, dass**
- immer wenigstens zwei Mitnehmer (15) gleichzeitig in die Ausnehmungen (12) des Führungsteils (3) eingreifen.

8. Fördereinrichtung (1) nach einem der vorangegangenen Ansprüche, **dadurch gekennzeichnet, dass**
- das Endloszugmittel (2) mittels einer ersten Antriebseinrichtung antreibbar ist.

## Claims

1. Conveyor device (1) with a driven endless traction means (2) for products of the tobacco processing industry, comprising
- at least one deflector device (29), at the outer side of which the endless traction means (2) is deflected, wherein
- the endless traction means (2) comprises outward-projecting drive dogs (15) for carrying the products, wherein
- the deflector device (29) is formed by a pivot-mounted guide member (3) comprising a guiding surface (14) which is discontinuous due to regularly spaced recesses (12) into which the drive dogs (15) can be engaged, wherein the recesses (12) are shaped in such a way that the drive dogs (15) during the disengaging movement get to bear against the rim (17) of the guide member (3) delimiting the recess (12), and that the guide member (3) thereby is driven to a rotational movement,
**characterized in that**
- the recesses (12) are formed by outward-narrowing pockets.

2. Conveyor device (1) according to claim 1, **characterized in that**
- the guide member (3) is designed as a disc.

3. Conveyor device (1) according to claim 2, **characterized in that**
- at least two guide members (3) designed as discs which are arranged coaxially at a distance from each other and bear against the endless traction means (2) are provided for guiding the endless traction means (2).

4. Conveyor device (1) according to claim 3, **characterized in that**
- the discs are connected to each other in a torque-proof manner.

5. Conveyor device (1) according to claim 3 or 4, **characterized in that**
- the discs are arranged in such a way that the recesses (12) are aligned transverse to the movement of the endless traction means (2).

6. Conveyor device (1) according to one of the claims 3 to 5, **characterized in that**
- the drive dogs (15) themselves or as a whole show or form a comb structure (19) with separately projecting teeth (30), and
- that the discs have a thickness which is smaller than the distance of the teeth (30).

7. Conveyor device (1) according to any one of the preceding claims, **characterized in that**
- at any time at least two drive dogs (15) simultaneously engage into the recesses (12) of the guide member (3).

8. Conveyor device (1) according to any one of the preceding claims, **characterized in that**
- the endless traction means (2) can be driven via a first drive device.

## Revendications

1. Dispositif de transport (1) doté d'un moyen de traction sans fin (2) entraîné pour des produits de l'industrie du traitement du tabac, doté
- d'au moins un dispositif de changement de direction (29) à l'extérieur duquel le moyen de traction sans fin (2) est redirigé,
- le moyen de traction sans fin (2) comportant des entraîneurs (15) saillant vers l'extérieur pour entraîner les produits,
- le dispositif de changement de direction (29) étant formé par une partie de guidage (3) disposée de façon à pouvoir tourner, ladite partie comportant une surface de guidage (14) interrompue par des évidements (12) disposés à intervalles réguliers dans lesquels les entraîneurs (15) peuvent être engrenés,
- les évidements (12) étant formés de telle sorte que les entraîneurs (15) se placent, pendant le mouvement de désengrènement, en butée contre le bord (17) de la partie de guidage (3) délimitant l'évidement (12), et la partie de guidage (3) étant ainsi entraînée pour effectuer un mouvement de rotation,
**caractérisé en ce que**
- les évidements (12) sont formés par des poches se rétrécissant vers l'extérieur.

2. Dispositif de transport (1) selon la revendication 1, **caractérisé en ce que**
- la partie de guidage (3) prend la forme d'un disque.

3. Dispositif de transport (1) selon la revendication 2, **caractérisé en ce que**
- au moins deux parties de guidage (3) prenant la forme d'un disque, disposées à une certaine distance l'une de l'autre dans le plan coaxial et reposant contre le moyen de traction sans fin (2) sont prévues pour guider le moyen de traction sans fin (2).

4. Dispositif de transport (1) selon la revendication 3, **caractérisé en ce que**
- les disques sont reliés entre eux solidairement en rotation.

5. Dispositif de transport (1) selon la revendication 3 ou 4, **caractérisé en ce que**
- les disques sont disposés de telle sorte que les évidements (12) sont alignés dans le plan transversal par rapport au mouvement du moyen de traction sans fin (2).

6. Dispositif de transport (1) selon l'une quelconque des revendications 3 à 5, **caractérisé en ce que**
- les entraîneurs (15) comportent ou forment eux-mêmes ou dans leur totalité une structure pectinée (19) dotée de dents (30) saillant individuellement, et
- les disques présentent une épaisseur inférieure à l'écartement des dents (30).

7. Dispositif de transport (1) selon l'une quelconque des revendications précédentes, **caractérisé en ce que**
- au moins deux entraîneurs (15) s'engrènent toujours simultanément dans les évidements (12) de la partie de guidage (3).

8. Dispositif de transport (1) selon l'une quelconque des revendications précédentes, **caractérisé en ce que**
- le moyen de traction sans fin (2) peut être entraîné au moyen d'un premier dispositif d'entraînement.
